# EUROPÄISCHE PATENTSCHRIFT

(11) **EP 3 371 651 B1**
(45) Veröffentlichungstag und Bekanntmachung des Hinweises auf die Patenterteilung: **25.12.2019**
(21) Anmeldenummer: 16774907.6
(22) Anmeldetag: 26.09.2016
(51) Int. Cl.: G03B 17/02, H04N 5/225, B60R 11/00

(54) **KAMERAMODUL**
CAMERA MODULE
MODULE CAMÉRA

(30) Priorität: 04.11.2015 DE 102015221580
(43) Veröffentlichungstag der Anmeldung: 12.09.2018
(73) Patentinhaber: Magna Mirrors Holding GmbH, 63877 Sailauf (DE)
(72) Erfinder: HENNIG, Stephan, 63856 Bessenbach (DE)
(74) Vertreter: Völger, Silke Beatrix
(86) Internationale Anmeldenummer: PCT/EP2016/072859
(87) Internationale Veröffentlichungsnummer: WO 2017/076554

(56) Entgegenhaltungen:
- EP-A1- 2 722 711
- EP-A2- 2 924 398
- DE-U1-202008 013 606

## Beschreibung

### Gebiet der Erfindung

Die vorliegende Erfindung betrifft ein Kameramodul sowie eine Kameramodul-Befestigung. Die Erfindung umfasst weiter ein Verfahren zur Befestigung eines Kameramoduls.

### Stand der Technik

Üblicherweise sind Kameragehäuse zur Befestigung an Kraftfahrzeugen vorgesehen, wobei in den Kameragehäusen Kameras angeordnet sind. Solche Kameras dienen zur Kollisionsvermeidung, zur Sichtgebung oder zur Bildgebung.

Aus der EP 2 924 398 A2 ist eine Sensoranordnung mit einem Sensor und einem Sensorhauptkörper aus dem ein Sensorkopf herausragt bekannt. Der Sensor wird über Befestigungsabschnitte in einem Sensorhalter gehalten. Der Sensorhalter kann einteilig mit einem an dem Kraftfahrzeug angebundenen Haltearm ausgeführt sein und weist zu den Befestigungsabschnitten des Sensors korrespondierende Befestigungsabschnitte auf.

Des Weiteren ist aus der EP 2 722 711 A1 eine Kamerabefestigung bekannt, bei der ein Kameramodul zumindest teilweise in eine Montageöffnung eingesteckt und über Befestigungsabschnitte an einer Montageplatte befestigt ist.

Aus der WO2007053404A2 ist ein Kameramodul bekannt welches zur Befestigung an Kraftfahrzeugen ausgebildet ist, wobei eine Kamera zumindest teilweise mit einer Außenschale umspritzt ist. Die Außenschale weist zwei Montagelaschen auf in welchen jeweils ein Verstärkungselement mit eingespritzt sein kann. Dieses Kameramodul kann an dafür vorgesehenen Stellen am Kraftfahrzeug durch Verschrauben befestigt werden. Das Kameramodul wird in dafür vorgesehene Kameramontageöffnungen eingesetzt und mit durch die zwei Montagelaschen durchgesteckte Schrauben mit dem Kraftfahrzeug, beispielsweise dem Außenspiegelgehäuse, verbunden.

Nachteilig bei dieser Ausführung ist, dass das Werkzeug zur Herstellung des Außenspiegelgehäuses teuer ist, da Gewindeabschnitte zur Befestigung des Kameramoduls vorgesehen werden müssen, wodurch die Fertigungszeit und die Kosten erhöht werden, da das Werkzeug einen Gewindebohrer zur Herstellung des Gewindes benötigt.

### Zusammenfassung der Erfindung

Es ist eine Aufgabe der Erfindung,eine Kameramodulbefestigung an einem Kraftfahrzeug in der Hinsicht zu verbessern, dass Fertigungs- und Montagezeiten sowie Herstellkosten reduziert werden und dabei eine einfache und zuverlässige Montage ermöglicht wird.

Die Lösung der Aufgabe erfolgt durch eine Kameramodulbefestigung mit einem Kameramodul zum Befestigen an einem Kraftfahrzeug und einer am Kraftfahrzeug angeordneten Befestigungsanordnung gemäß Anspruch 1.

Das Kameramodul besteht im Wesentlichen aus dem Kameragehäuse und der Kamera. Das Kameragehäuse ist dabei speziell für die Kamera ausgebildet und weist eine der Kamera angepasste Geometrie auf. Öffnungen im Kameragehäuse ermöglichen das Einsetzen der Kamera in das Kameragehäuse, sowie den erforderlichen Zugang für elektrische Anschlüsse. Das Kameragehäuse verhindert zuverlässig, dass Schmutz und/oder Spritzwasser an die Elektronik der Kamera gelangen kann.

Weiterbildungen der Erfindung sind in den abhängigen Ansprüchen, der Beschreibung sowie den beigefügten Zeichnungen angegeben.

Das Kameragehäuse des Kameramoduls ist mit dem ersten Befestigungsabschnitt einteilig ausgebildet.

Das Kameragehäuse wird dabei bevorzugt im Spritzgussverfahren aus Kunststoff hergestellt.

Es kann in einer vorteilhaften Ausbildungsform/Ausgestaltung vorgesehen werden, dass im Befestigungsabschnitt ein Verstärkungselement oder dergleichen eingesetzt und mit umspritzt ist, wobei das Verstärkungselement aus Metall hergestellt sein kann und wobei im Verstärkungselement der Gewindeabschnitt ausgebildet ist.

Alternativ kann das Kameragehäuse auch metallisch ausgebildet sein.

Erfindugnsgemäß weist das Kameragehäuse einen integrierten Haltering auf.

Der Haltering ist erfindungsgemäß im Wesentlichen durch mindestens zwei segmentförmige Schalen, insbesondere zwei Halbschalen gebildet.

Die zwei Halbschalen des Halterings sind mittels Filmscharnieren mit dem Kameragehäuse befestigt.

Die zwei Halbschalen des Halterings sind insbesondere in Richtung einer Kameralinse der Kamera verschwenkbar.

In einer weiteren Ausführungsform ist der Haltering aus einer Vielzahl von Schalen gebildet, wobei jede Schale über jeweils ein Filmscharnier am Kameragehäuse angeordnet ist. Das Kameragehäuse kann dabei zylindrisch oder kugelförmig ausgebildet sein, wodurch die Anzahl der Schalen auch ungerade sein kann.

Die Kamera weist einen um die Kameralinse umlaufenden Abschnitt auf, mit welchem die zwei Halbschalen des Halterings in Eingriff bringbar sind.

Der umlaufende Abschnitt der Kamera und/oder die zwei Halbschalen des Halterings weisen geneigte Flächen auf, sodass bei Verschwenken der zwei Halbschalen, bis die zwei Halbschalen mit dem umlaufenden Abschnitt der Kamera in Kontakt stehen, die geneigten Flächen eine Selbsthemmung bewirken und so die zwei Halbschalen des Halterings in Position halten.

In einer bevorzugten Ausführungsform können die Halbschalen Befestigungs-Clips aufweisen, um die beiden Halbschalen miteinander zu verbinden. Bei dieser Ausführungsform weisen die Halbschalen und/oder der umlaufende Abschnitt der Kamera bevorzugt keine geneigten Flächen auf.

Dadurch ist es auch vorteilhaft nicht erforderlich, dass die beiden Halbschalen durch Schweißen, Kleben oder anderen bekannten Fügeverfahren miteinander verbunden werden müssen, was wiederum den Vorteil bietet, dass sie wieder getrennt werden können, wodurch die Kamera aus dem Kameragehäuse wieder entfernbar ist.

Es wird somit erreicht, dass die Kamera zuverlässig im Kameragehäuse positioniert und gehalten ist. Das Kameragehäuse weist zumindest ein integriertes Federelement auf, welches eine Vorspannung erzeugt, wodurch die Kamera im Kameragehäuse spielfrei gehalten wird. Dieses integrierte Federelement kann beispielsweise in Form einer gewölbten Fläche ausgebildet sein, wobei sich die Wölbung in Richtung Gehäuseinnenraum erstreckt.

Erfindungsgemäß ist das Kameramodul mit einer am Kraftfahrzeug vorgesehenen Befestigungsanordnung verbindbar.

Die Befestigungsanordnung umfasst im Wesentlichen eine Kameramontageöffnung und zumindest einen zweiten Befestigungsabschnitt.

Das Kameramodul ist in die Kameramontageöffnung einsetzbar, wobei die Kameralinse durch die Kameramontageöffnung durchgesteckt wird.

Das Kameragehäuse, insbesondere der integrierte Haltering, dichtet dabei gegen die Kameramontageöffnung, welche durch eine ringförmige Umrandung begrenzt ist ab und verhindert ein weiteres Durchstecken des Kameramoduls durch die Kameramontageöffnung.

Das Kameramodul ist in der Kameramontageöffnung so angeordnet, dass der erste Befestigungsabschnitt des Kameramoduls am zweiten Befestigungsabschnitt des Kraftfahrzeugs gehalten ist.

Der zweite Befestigungsabschnitt des Kraftfahrzeugs weist eine Fläche auf, welche im Wesentlichen senkrecht zur Mittelachse des Innengewindes im ersten Befestigungsabschnitt ausgebildet ist, wobei die Fläche eine Durchgangsbohrung aufweist und wobei die Mittelachse der Durchgangsbohrung mit der Mittelachse des Innengwindes im ersten Befestigungsabschnitt, wenn der erste Befestigungsabschnitt am zweiten Befestigungsabschnitt gehalten ist, miteinander fluchten, bzw. koaxial zueinander ausgerichtet sind.

Erfindungsgemäß erfolgt eine dauerhafte Verbindung des Kameramoduls mit dem Kraftfahrzeug über die Kameramodul-Befestigung mittels mindestens einer Verschraubung, wobei die Verschraubung durch die Durchgangsbohrung des zweiten Befestigungsabschnitts mit dem Innengewinde des ersten Befestigungsabschnitts erfolgt.

Es wird weiter ein Verfahren beschrieben bei welchem das erfindungsgemäße Kameramodul an einem Kraftfahrzeug mittels der Kameramodul-Befestigung befestigt wird, wobei das Kameramodul in die Kameramontageöffnung am Kraftfahrzeug eingesetzt wird und danach das Kameramodul in der Kameramontageöffnung solange verdreht wird, bis der erste Befestigungsabschnitt des Kameramoduls am zweiten Befestigungsabschnitt des Kraftfahrzeugs gehalten wird, und dann die Befestigung des Kameramoduls am Kraftfahrzeug mittels mindestens einer Verschraubung erfolgt.

### Kurzbeschreibung der Zeichnungen

Die Erfindung wird im Folgenden beispielhaft unter Bezugnahme auf die Zeichnungen beschrieben.
- Fig. 1: ist eine perspektivische Ansicht des Kameragehäuses
- Fig. 2: ist eine perspektivische Ansicht des Kameragehäuses in welcher die Kamera eingesetzt ist.

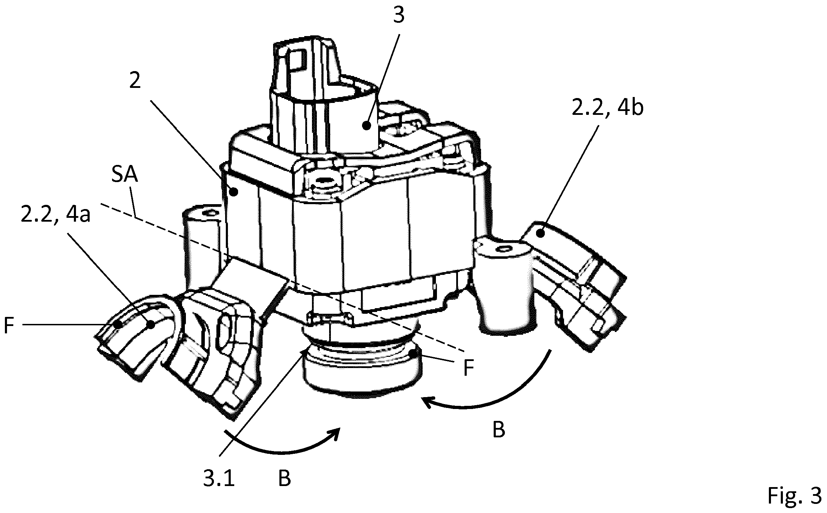

- Fig. 3: ist eine weitere perspektivische Ansicht mit der im Kameragehäuses eingesetzten Kamera, wobei die Halbschalen des Halterings teilweise verschwenkt sind.
- Fig. 4: ist eine Seitenansicht des Kameramoduls, wobei die Halbschalen mit der Kamera in Eingriff sind.
- Fig. 5: ist eine perspektivische Ansicht eines erfindungsgemäßen Kameramoduls und einer kraftfahrzeugseitigen Befestigungsanordnung.
- Fig. 6: ist eine Draufsicht des erfindungsgemäßen Kameramoduls sowie den zweiten Befestigungsabschnitten gemäß Fig. 5.

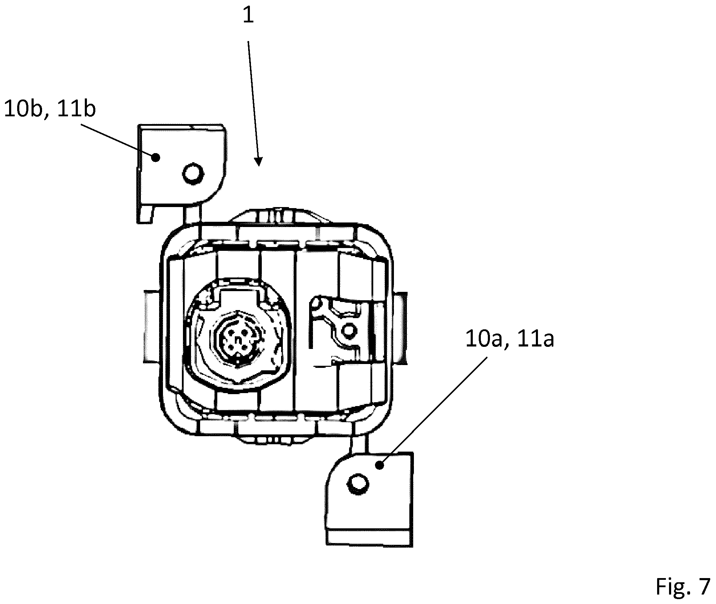

- Fig. 7: ist eine weitere Draufsicht des Kameramoduls und den zweiten Befestigungsabschnitten gemäß Fig. 1, wobei die ersten Befestigungsabschnitte in den zweiten Befestigungsabschnitten gehalten sind.
- Fig. 8: ist eine Seitenansicht in welcher das Kameramodul mit der kraftfahrzeugseitigen Befestigungsanordnung verschraubt ist
- Fig. 9: ist eine Draufsicht auf das Kameramodul.
- Fig. 10: ist eine Schnittdarstellung A-A gemäß Fig. 9.
- Fig. 11: ist eine Schnittdarstellung B-B gemäß Fig. 9.

### Detaillierte Beschreibung der Erfindung

Das erfindungsgemäße Kameramodul weist im Wesentlichen ein Kameragehäuse 2 sowie eine in das Kameragehäuse 2 eingesetzte Kamera 3 auf.

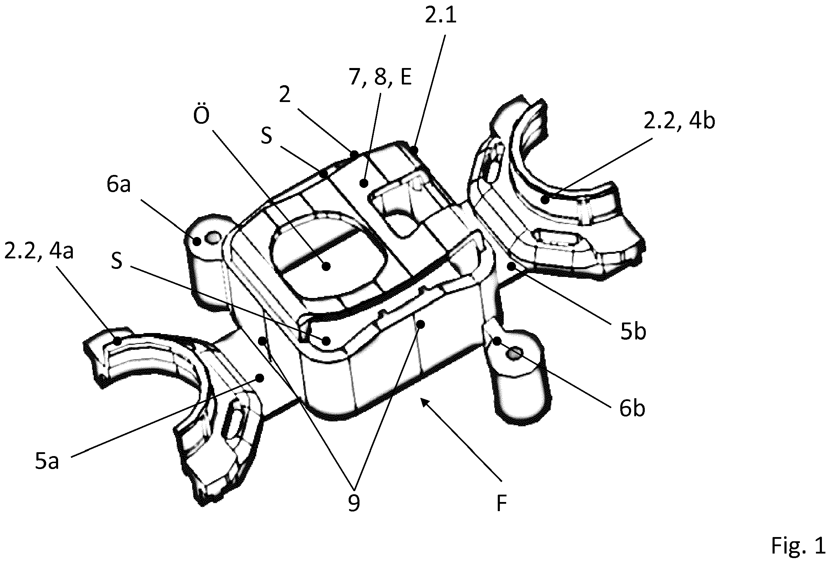

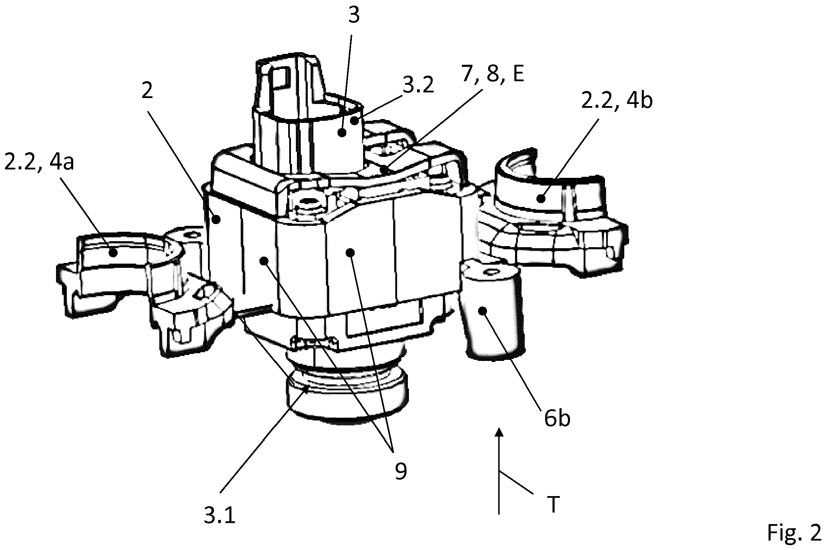

Fig. 1 zeigt eine perspektivische Ansicht des Kameragehäuses 2 mit integriertem Haltering 2.2. Der Gehäusegrundkörper 2.1 des Kameragehäuses 2 weist vier Seitenflächen 9 auf, welche eine im Wesentlichen rechteckige bzw. quadratische Form bilden. Der Gehäusegrundkörper 2.1 weist weiter ein Abdeckelement 8 auf. Das Abdeckelement 8 überspannt den durch die Seitenflächen 9 gebildeten Aufnahmeraum für die Kamera 3. Das Abdeckelement 8 ist an ersten und zweiten gegenüberliegenden Seitenflächen angebunden. Das Abdeckelement 8 weist eine nach innen gewölbt ausgebildete Fläche 7 auf. Zwischen den dritten und vierten gegenüberliegenden Seitenflächen ist eine schlitzförmige Ausnehmung S eingebracht. Durch diese Ausgestaltung und Anbindung des Abdeckelementes 8 wirkt dieses als Federelement. In das Abdeckelement 8 ist eine Öffnung Ö eingebracht. Bei in das Kameragehäuse 2 eingesetzter Kamera 3 ragt ein Endbereich 3.2 der Kamera, welcher auch elektronische Anschlüsse aufweisen kann, durch diese Öffnung Ö nach außen. Dies ist in der Figur 2 ersichtlich. Das Abdeckelement 8 ist gegenüberliegend zu einer Gehäusegrundkörperöffnung 8.1 angeordnet, durch welche die Kamera 3 in das Kameragehäuse 2 bzw. den Gehäusegrundkörper 2.1 einsetzbar ist. Das Kameragehäuse ist aus einem thermoplastischen Kunststoffmaterial in einem Spritzgießverfahren hergestellt. Der integrierte Haltering 2.2 umfasst zwei Halbschalen 4a, 4b, welche über Filmscharniere (5a, 5b) mit dem Gehäusegrundkörper 2.1 an den der Gehäusegrundkörperöffnung 8.1 zugewandten Endbereichen der Seitenflächen 9 verbunden ist und eine Schwenkachse SA bilden. Die Halbschalen 4a, 4b sind dabei am Gehäusegrundkörper 2.1 an einander gegenüberliegenden ersten und zweiten Seitenflächen 9 angeordnet. Der Gehäusegrundkörper 2.1 weist des Weiteren erste Befestigungsabschnitte 6a, 6b auf. Die ersten Befestigungsabschnitte 6a, 6b sind an den dritten und vierten einander gegenüberliegenden Seitenflächen 9 angeordnet. Aus der Darstellung der Figur 1 ist ersichtlich, dass die Befestigungsabschnitte 6a, 6b an den einander diagonal gegenüberliegenden Ecken der dritten und vierten Seitenflächen 9 angeordnet sind.

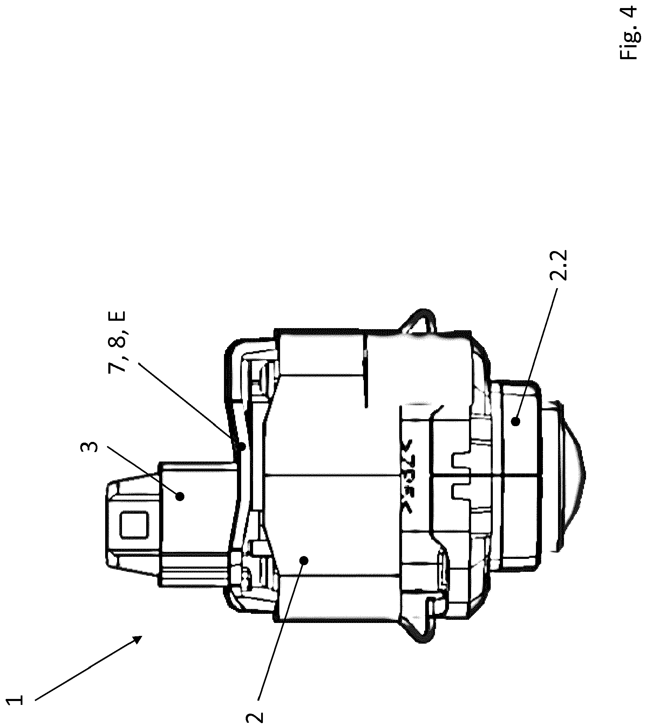

Fig. 2 zeigt die in den Gehäusegrundkörper 2.1 eingesetzte Kamera 3 bei geöffnetem Gehäusegrundkörper 2.1. Die Kamera 3 wird in Richtung des Pfeils T in den Gehäusegrundkörper eingefügt. Nachdem die Kamera 3 in das Kameragehäuse 2 eingesetzt ist, werden die Halbschalen 4a, 4b des Halterings 2.2 über die Schwenkachsen SA verschwenkt, bis diese, wie in Fig. 4 dargestellt, mit einem umlaufenden Abschnitt 3.1 der Kamera 3 in Kontakt stehen. Die Verschwenkbewegung der Halbschalen 4a, 4b ist durch die Pfeile B dargestellt. Die Halbschalen 4a, 4b und/oder der umlaufene Abschnitt 3.1 der Kamera 3 weisen ringförmig verlaufende angefaste Flächen F auf. Die angefasten Flächen bewirken eine Selbsthemmung wodurch die zwei Halbschalen 4a, 4b in Position gehalten werden. Das Abdeckelement 8 erzeugt, aufgrund der Ausgestaltung als Federelement eine Vorspannung, wodurch die Kamera 3 spielfrei im Gehäusegrundkörper 2.1 gehalten wird.

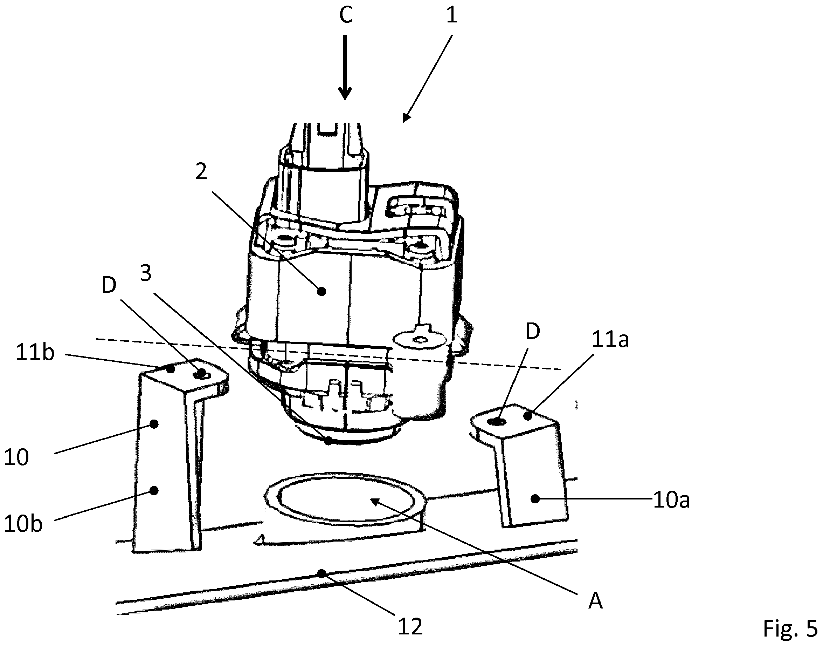

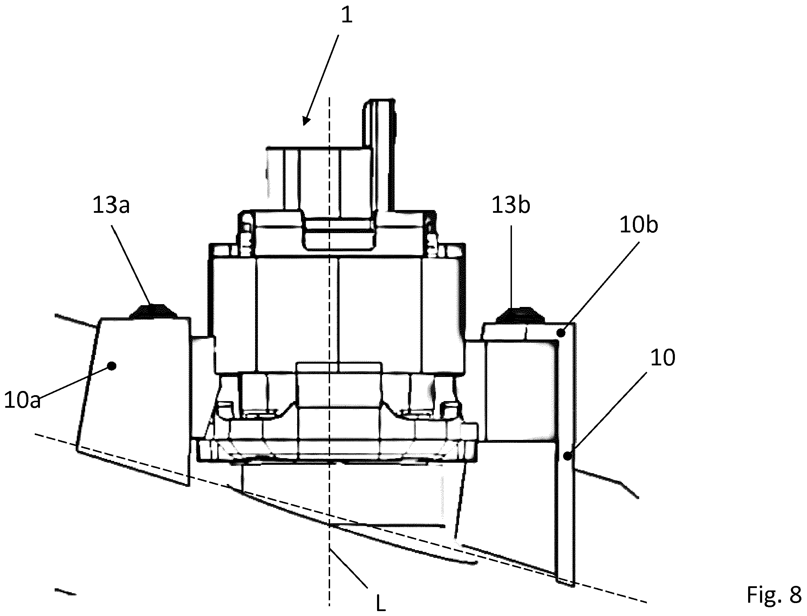

Fig. 5 zeigt das Kameramodul 3 sowie eine kraftfahrzeugseitige Befestigungsanordnung. Wie es insbesondere aus der Darstellung der Figur 8 zu erkennen ist, weist die kraftfahrzeugseitige Befestigungsanordnung einen Oberflächenabschnitt mit einer geneigten Oberfläche 12 auf, in die eine Kameramontageöffnung eingebracht A ist. Der Oberflächenabschnitt ist beispielsweise ein Spiegelgehäuse oder ein anderes karosserieseitiges Bauteil an das ein Kameramodul befestigt werden soll. Weiterhin sind zwei zweite Befestigungsabschnitte 10a, 10b auf der geneigten Oberfläche 12 angeordnet. Die zweiten Befestigungsabschnitte 10a, 10b sind im Wesentlichen L-förmig ausgebildet und weisen vertikal nach oben ragende Schenkel 10 und horizontal an den Schenkeln 10 auskragende Befestigungsflächen 11a, 11b auf, die horizontal ausgerichtet sind und Durchgangsbohrungen D aufweisen, die zur Montage des Kameramoduls an der kraftfahrzeugseitigen Befestigungsanordnung dienen. Die Befestigungsabschnitte 10a, 10b weisen unterschiedliche Höhen H1 und H2 auf, wobei die unterschiedlichen Höhen derart gewählt sind, dass die Befestigungsflächen 11a, 11b in einer Ebene B liegen, die zu einer Montageebene M der Kamera 3 parallel ist. Die Montageebene M bildet dabei einen Winkel W mit der geneigten Oberfläche 12. Die Montageebene M ist dabei unter einem Winkel von 90 Grad zu der Mittellängsachse L des Kameramoduls angeordnet.

Ein Pfeil C zeigt die Richtung, in welche das Kameramodul 1 in die Kameramontageöffnung A eingesetzt wird, wobei die Kameralinse der Kamera 3 durch die Kameramontageöffnung A durchgesteckt wird. Das Kameragehäuse 2, insbesondere der integrierte Haltering 2.2, dichtet dabei gegen die Kameramontageöffnung A, welche durch eine ringförmige Umrandung begrenzt ist, ab und verhindert ein weiteres Durchstecken des Kameramoduls 1 durch die Kameramontageöffnung A.

Beim Einsetzen des Kameramoduls 1 in die Kameramontageöffnung A müssen die ersten Befestigungsabschnitte 6a, 6b und die zweiten Befestigungsabschnitte 10a, 10b zueinander versetzt sein, um eine ungewollte Kollision der ersten Befestigungsabschnitte 6a, 6b mit den Befestigungsflächen 11a, 11b der zweiten Befestigungsabschnitten 10a, 10b zu verhindern.

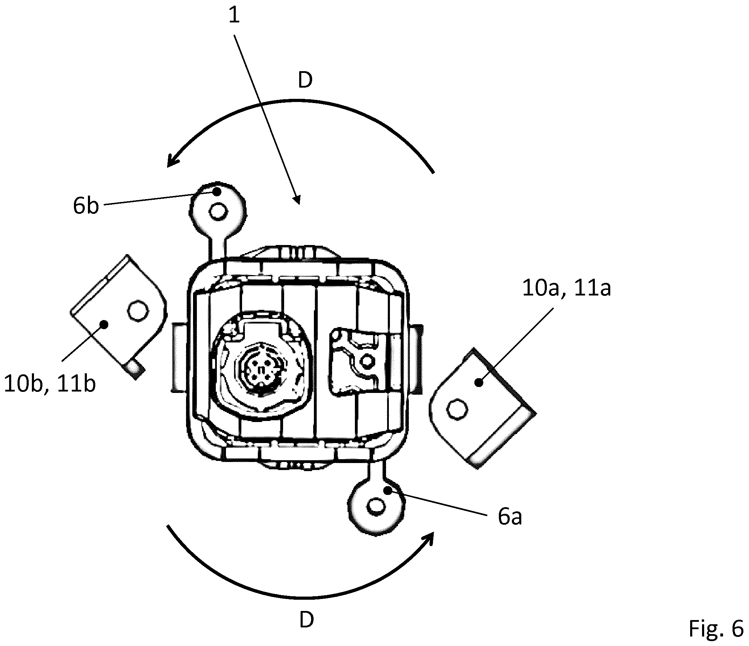

In Fig. 6 ist eine Draufsicht des Kameramoduls 1 und der kraftfahrzeugseitigen Befestigungsanordnung dargestellt. Die zwei ersten Befestigungsabschnitte 6a, 6b des Kameramoduls 1 und die zwei zweiten Befestigungsabschnitte 10a, 10b der kraftfahrzeugseitigen Befestigungsanordnung werden durch Verdrehen des Kameramoduls 1 wie durch die Pfeile D dargestellt, in der Kameramontageöffnung A derart ausgerichtet, dass jeweils die Durchgangsbohrung eines ersten Befestigungsabschnittes 6a bzw. 6b und die Durchgangsbohrung der Befestigungsfläche eines zweiten Befestigungsabschnittes 10a bzw. 10b fluchtend zueinander verlaufen. Die Bauteile werden in dieser Position über Schrauben fixiert. Die nach oben ragenden Schenkel 10 der Befestigungsabschnitte 10a, 10b wirken als mechanische Anschläge, die ein weiteres Verdrehen des Kameramoduls 1 verhindern.

In Fig. 8 ist eine Seitenansicht in welcher das Kameramodul 1 mit dem Kraftfahrzeug mittels Verschrauben 13a, 13b verbunden ist, dargestellt.

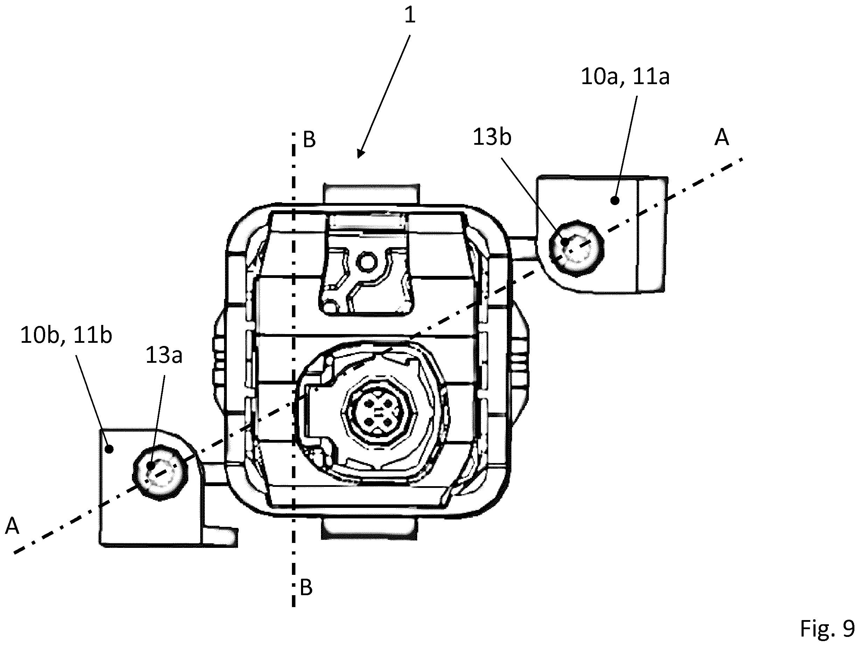

In Fig. 9 ist eine Draufsicht des mit dem Kraftfahrzeug verschraubten Kameramoduls 1 zu sehen.

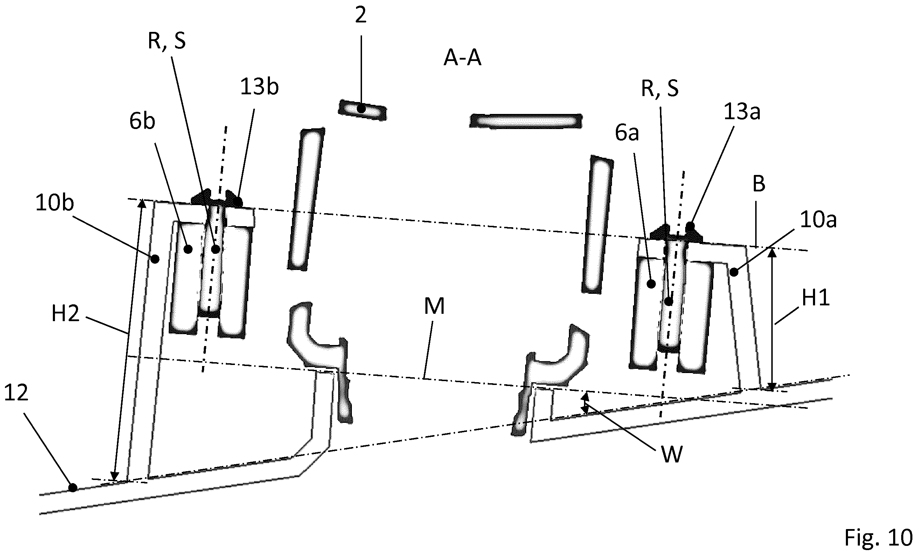

Fig. 10 zeigt eine Schnittansicht A-A gemäß Fig. 9 durch die Befestigungsanordnung. Die ersten Befestigungsabschnitte 6a, 6b des Kameramoduls weisen einen zylindrischen Grundkörper auf, in die eine Durchgangsbohrung mit einem Innengewindeabschnitt eingebracht ist. Die Darstellung zeigt die Befestigung des Kameramoduls an den zweiten Befestigungsabschnitten, wobei jeweils eine Schraube 13a, 13b vorgesehen ist. Die Schrauben 13a, 13b sind hierbei durch die Durchgangsbohrungen der zwei zweiten Befestigungsabschnitte 10a, 10b gesteckt und im Innengewindeabschnitt eingeschraubt. Wie es aus der Zeichnung zu erkennen ist, ist die jeweilige Mittelachse S zu der Mittelachse R des jeweils zugeordneten Innengewindeabschnitts des ersten Befestigungsabschnitts 6a, 6b fluchtend angeordnet. Die Mittelachse R des Innengewindeabschnitts verläuft im Wesentlichen parallel zu der Seitenfläche 9 des Kameragehäuses 2.

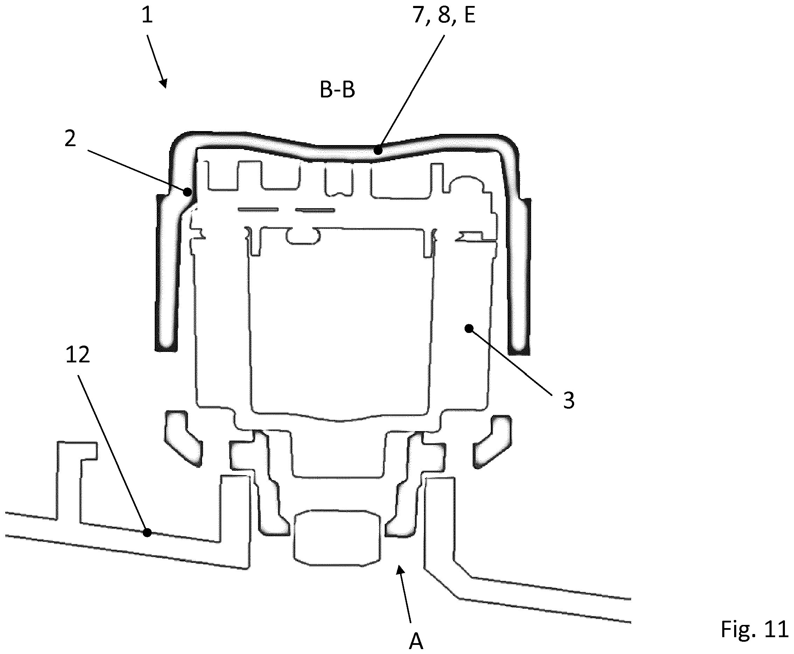

Fig. 11 zeigt eine Schnittansicht B-B gemäß Fig. 9. Das Kameragehäuse 2 weist, wie es bereits obenstehend näher erläutert ist ein Abdeckelement 8 auf, welches als integriertes Federelement 7 wirkt und die Form einer Wölbung E aufweist. Das als Wölbung E ausgebildete integrierte Federelement 7 erzeugt eine Vorspannung welche gegen die Kamera 3 wirkt und so die Kamera 3 spielfrei im Kameragehäuse 2 hält. In einer nicht gezeigten Ausführungsform weisen vorteilhafterweise zumindest eine Seitenfläche 9 und die Abdeckfläche 8 eine Wölbung E auf. Die Wölbung der Seitenfläche ist dabei in Richtung Aufnahmeraum des Gehäusegrundkörpers 2.1 ausgebildet.

### Bezugszeichenliste

- 1: Kameramodul
- 2: Kameragehäuse
- 2.1: Gehäusegrundkörper
- 2.2: Haltering
- 3: Kamera
- 3.1: umlaufender Abschnitt
- 4a, 4b: Halbschale
- 5a, 5b: Filmscharnier
- 6a, 6b: erster Befestigungsabschnitt
- 7: integriertes Federelement
- 8: Abdeckelement
- 9: Seitenfläche
- 10a, 10b: zweiter Befestigungsabschnitt
- 11a, 11b: Befestigungsfläche
- 12: erste geneigte Fläche
- 13a, 13b: Verschraubung, Schraube

- A: Kameramontageöffnung
- B: Pfeil
- C: Pfeil
- D: Pfeil
- E: Wölbung
- F: Kameragehäuseöffnung
- R: Mittelachse
- S: Mittelachse

## Patentansprüche

1. Kameramodul-Befestigung umfassend ein Kameramodul (1), umfassend ein Kameragehäuse (2) mit einem Gehäusegrundkörper (2.1) und eine im Kameragehäuse (2) angeordnete Kamera (3), wobei das Kameragehäuse (2) zumindest einen ersten Befestigungsabschnitt (6a, 6b) umfasst, der zumindest abschnittsweise ein Innengewinde aufweist, welches zur Befestigung des Kameramoduls (1) am Kraftfahrzeug vorgesehen ist, und wobei das Kameragehäuse (2) einen integrierten Haltering (2.2) aufweist, und einer am Kraftfahrzeug vorgesehenen Befestigungsanordnung, wobei der erste Befestigungsabschnitt (6a, 6b) des Kameramoduls (1) mit der am Kraftfahrzeug vorgesehenen Befestigungsanordnung verbunden ist und wobei die Befestigungsanordnung eine Kameramontageöffnung (A) und zumindest einen zweiten Befestigungsabschnitt (10a, 10b) umfasst, und wobei das Kameramodul (1) in der Kameramontageöffnung (A) so angeordnet ist, dass der erste Befestigungsabschnitt (6a, 6b) am zweiten Befestigungsabschnitt (10a, 10b) gehalten ist, **dadurch gekennzeichnet, dass** der Haltering (2.2) durch zwei segmentförmige Halbschalen (4a, 4b) gebildet ist und dass die zwei Halbschalen (4a, 4b) des Halterings (2.2) mittels Filmscharnieren (5a, 5b) an dem Gehäusegrundkörper (2.1)) befestigt sind, und dass die zwei Halbschalen (4a, 4b) des Halterings (2.2), insbesondere in Richtung einer Kameralinse der Kamera (3), verschwenkbar sind.

2. Kameramodul Befestigung nach Anspruch 1,
**dadurch gekennzeichnet , dass** die Kamera (3) einen um die Kameralinse umlaufenden Abschnitt (3.1) aufweist, mit welchem die zwei Halbschalen (4a, 4b) des Halterings (2.2) in Eingriff bringbar sind.

3. Kameramodul Befestigung nach Anspruch 2,
**dadurch gekennzeichnet, dass** der umlaufende Abschnitt (3.1) der Kamera (3) und/oder die zwei Halbschalen (4a, 4b) des Halterings (2.2) angefaste Flächen aufweisen, sodass bei Verschwenken der zwei Halbschalen (4a, 4b), bis die zwei Halbschalen (4a, 4b) mit dem umlaufenden Abschnitt (3.1) der Kamera (3) in Kontakt stehen, die angefasten Flächen eine Selbsthemmung bewirken und so die zwei Halbschalen (4a, 4b) in Position gehalten sind.

4. Kameramodul-Befestigung nach zumindest einem der vorhergehenden Ansprüche,
**dadurch gekennzeichnet, dass** der zweite Befestigungsabschnitt (10a, 10b) des Kraftfahrzeugs eine Befestigungsfläche (11a bzw. 11b) aufweist, in die eine Durchgangsbohrung D eingebracht ist, wobei die Mittelachse (S) der Durchgangsbohrung im zweiten Befestigungsabschnitt (10a, 10b) mit der Mittelachse (R) des Innengewindes im ersten Befestigungsabschnitt (6a, 6b), wenn der erste Befestigungsabschnitt am zweiten Befestigungsabschnitt (10a, 10b) gehalten ist, miteinander fluchten.

5. Kameramodul-Befestigung nach zumindest einem der vorhergehenden Ansprüche,
**dadurch gekennzeichnet, dass** an dem Kameragehäuse (2) zwei erste Befestigungsabschnitte (6a, 6b) und an der Befestigungsanordnung jeweils zwei den ersten Befestigungsabschnitten (6a, 6b) zugeordneten zweite Befestigungsabschnitte (10a, 10b) ausgebildet sind.

6. Kameramodul-Befestigung nach zumindest einem der vorhergehenden Ansprüche 1 bis 5,
**dadurch gekennzeichnet, dass** eine dauerhafte Verbindung des Kameramoduls (1) mit dem Kraftfahrzeug über die Kameramodul-Befestigung mittels mindestens einer Verschraubung (13a, 13b) erfolgt, wobei die Verschraubung (13a, 13b) durch die Durchgangsbohrung des zweiten Befestigungsabschnitts (10a, 10b) mit dem Innengewinde des ersten Befestigungsabschnitts (6a, 6b) erfolgt.

7. Verfahren zur Herstellung einer Kameramodul-Befestigung nach zumindest einem der vorhergehenden Ansprüche 1 bis 6,
mit den folgenden Verfahrensschritten:
a) Herstellen eines Kameramoduls (1) durch Einsetzen einer Kamera (3) in einen Gehäusegrundkörper (2.1) und
b) Verschwenken von Halbschalen (4a, 4b) eines Halterings (2.2) in Richtung auf eine Kameralinse der Kamera (3) bis die Halbschalen (4a, 4b) mit einem umlaufenden Abschnitt der Kamera (3) in Kontakt stehen
c) Einsetzen des Kameramoduls (1) in eine Kameramontageöffnung (A) eines karosserieseitigen Bauteils am Kraftfahrzeug
d) Verdrehen des Kameramoduls (1) in der Kameramontageöffnung (A) solange, bis der erste Befestigungsabschnitt (6a, 6b) des Kameragehäuses (2) und der zweite Befestigungsabschnitt (10a, 10b) derart übereinanderliegend angeordnet sind, dass die Mittelachse der Durchgangsbohrung der Befestigungsfläche (11a bzw. 11b) des zweiten Befestigungsabschnitts (10a bzw. 10b) mit der Mittelachse des Innengewindes des ersten Befestigungsabschnitts (6a bzw. 6b) miteinander fluchten
e) Fixieren des Kameramoduls (1) am karosserieseitigen Bauteil durch Einstecken einer Schraube (13a bzw. 13b) in die Durchgangsbohrung (D) des zweiten Befestigungsabschnitts und Einschrauben in das Innengewinde des ersten Befestigungsabschnitts (6a bzw. 6b) zur Erzielung einer Schraubverbindung.

## Claims

1. Camera-module fastening comprising a camera module (1), comprising a camera housing (2) with a main housing body (2.1) and a camera (3) arranged in the camera housing (2), wherein the camera housing (2) comprises at least one first fastening portion (6a, 6b) which, at least in sections, has an internal thread which is provided for fastening the camera module (1) to the motor vehicle, and wherein the camera housing (2) has an integrated retaining ring (2.2), and a fastening arrangement provided on the motor vehicle, wherein the first fastening portion (6a, 6b) of the camera module (1) is connected to the fastening arrangement provided on the motor vehicle, and wherein the fastening arrangement comprises a camera mounting opening (A) and at least one second fastening portion (10a, 10b), and wherein the camera module (1) is arranged in the camera mounting opening (A) in such a manner that the first fastening portion (6a, 6b) is held on the second fastening portion (10a, 10b), **characterized in that** the retaining ring (2.2) is formed by two segment-shaped half shells (4a, 4b), and **in that** the two half shells (4a, 4b) of the retaining ring (2.2) are fastened to the main housing body (2.1) by means of film hinges (5a, 5b), and **in that** the two half shells (4a, 4b) of the retaining ring (2.2) are pivotable in particular in the direction of a camera lens of the camera (3).

2. Camera-module fastening according to Claim 1, **characterized in that** the camera (3) has a portion (3.1) which encircles the camera lens and with which the two half shells (4a, 4b) of the retaining ring (2.2) can be brought into engagement.

3. Camera-module fastening according to Claim 2, **characterized in that** the encircling portion (3.1) of the camera (3) and/or the two half shells (4a, 4b) of the retaining ring (2.2) have bevelled surfaces, and therefore, during pivoting of the two half shells (4a, 4b), until the two half shells (4a, 4b) are in contact with the encircling portion (3.1) of the camera (3), the bevelled surfaces cause self-locking and therefore the two half shells (4a, 4b) are held in position.

4. Camera-module fastening according to at least one of the preceding claims, **characterized in that** the second fastening portion (10a, 10b) of the motor vehicle has a fastening surface (11a or 11b) into which a through bore (D) is introduced, wherein the centre axis (S) of the through bore in the second fastening portion (10a, 10b) and the centre axis (R) of the internal thread in the first fastening portion (6a, 6b) are aligned with each other when the first fastening portion is held on the second fastening portion (10a, 10b).

5. Camera-module fastening according to at least one of the preceding claims, **characterized in that** two first fastening portions (6a, 6b) are formed on the camera housing (2) and in each case two second fastening portions (10a, 10b) assigned to the first fastening portions (6a, 6b) are formed on the fastening arrangement.

6. Camera-module fastening according to at least one of the preceding Claims 1 to 5, **characterized in that** a permanent connection of the camera module (1) to the motor vehicle via the camera-module fastening takes place by means of at least one screw connection (13a, 13b), wherein the screw connection (13a, 13b) takes place through the through bore of the second fastening portion (10a, 10b) with the internal thread of the first fastening portion (6a, 6b).

7. Method for producing a camera-module fastening according to at least one of the preceding Claims 1 to 6, with the following method steps:
a) producing a camera module (1) by inserting a camera (3) into a main housing body (2.1) and
b) pivoting half shells (4a, 4b) of a retaining ring (2.2) in the direction of a camera lens of the camera (3) until the half shells (4a, 4b) are in contact with an encircling portion of the camera (3),
c) inserting the camera module (1) into a camera mounting opening (A) of a body-side component on the motor vehicle,
d) rotating the camera module (1) in the camera mounting opening (A) until the first fastening portion (6a, 6b) of the camera housing (2) and the second fastening portion (10a, 10b) are arranged lying one above the other in such a manner that the centre axis of the through bore of the fastening surface (11a or 11b) of the second fastening portion (10a or 10b) and the centre axis of the internal thread of the first fastening portion (6a or 6b) are aligned with each other,
e) fixing the camera module (1) on the body-side component by inserting a screw (13a or 13b) into the through bore (D) of the second fastening portion and screwing it into the internal thread of the first fastening portion (6a or 6b) in order to obtain a screw connection.

## Revendications

1. Fixation de module caméra comportant un module caméra (1), comportant un boîtier de caméra (2) doté d'un corps de base de boîtier (2.1) et une caméra (3) disposée dans le boîtier de caméra (2), le boîtier de caméra (2) comportant au moins une première partie de fixation (6a, 6b) qui présente au moins dans certaines régions un filetage intérieur, lequel sert à la fixation du module caméra (1) au véhicule automobile, et le boîtier de caméra (2) comprenant une bague de retenue intégrée (2.2), et un ensemble de fixation prévu sur le véhicule automobile, la première partie de fixation (6a, 6b) du module caméra (1) étant reliée à l'ensemble de fixation prévu sur le véhicule automobile et l'ensemble de fixation comportant une ouverture de montage de caméra (A) et au moins une deuxième partie de fixation (10a, 10b), et le module caméra (1) étant disposé dans l'ouverture de montage de caméra (A) de telle sorte que la première partie de fixation (6a, 6b) soit retenue sur la deuxième partie de fixation (10a, 10b), **caractérisée en ce que** la bague de retenue (2.2) est formée par deux demi-coques (4a, 4b) en forme de segments, et **en ce que** les deux demi-coques (4a, 4b) de la bague de retenue (2.2) sont fixées au corps de base de boîtier (2.1) au moyen de charnières films (5a, 5b), et **en ce que** les deux demi-coques (4a, 4b) de la bague de retenue (2.2), sont pivotantes en particulier en direction d'un objectif de la caméra (3).

2. Fixation de module caméra selon la revendication 1,
**caractérisée en ce que** la caméra (3) comprend une partie (3.1) s'étendant autour de l'objectif de caméra, partie à l'aide de laquelle les deux demi-coques (4a, 4b) de la bague de retenue (2.2) peuvent être amenées en prise.

3. Fixation de module caméra selon la revendication 2,
**caractérisée en ce que** la partie périphérique (3.1) de la caméra (3) et/ou les deux demi-coques (4a, 4b) de la bague de retenue (2.2) présentent des surfaces biseautées, de telle sorte que lors du pivotement des deux demi-coques (4a, 4b), jusqu'à ce que les deux demi-coques (4a, 4b) soient en contact avec la partie périphérique (3.1) de la caméra (3), les surfaces biseautées produisent un blocage automatique et les deux demi-coques (4a, 4b) sont ainsi maintenues en position.

4. Fixation de module caméra selon au moins l'une des revendications précédentes,
**caractérisée en ce que** la deuxième partie de fixation (10a, 10b) du véhicule automobile comprend une surface de fixation (11a ou 11b) dans laquelle un alésage traversant (D) est ménagé, l'axe médian (S) de l'alésage traversant dans la deuxième partie de fixation (10a, 10b) et l'axe médian (R) du filetage intérieur dans la première partie de fixation (6a, 6b) étant alignés l'un avec l'autre lorsque la première partie de fixation est retenue sur la deuxième partie de fixation (10a, 10b).

5. Fixation de module caméra selon au moins l'une des revendications précédentes,
**caractérisée en ce que** deux premières parties de fixation (6a, 6b) sont réalisées sur le boîtier de caméra (2) et deux deuxièmes parties de fixation (10a, 10b) associées aux premières parties de fixation (6a, 6b) sont réalisées respectivement sur l'ensemble de fixation.

6. Fixation de module caméra selon au moins l'une des revendications précédentes 1 à 5,
**caractérisée en ce qu'**une liaison permanente du module caméra (1) au véhicule automobile s'effectue par le biais de la fixation de module caméra au moyen d'au moins un vissage (13a, 13b), le vissage (13a, 13b) s'effectuant à travers l'alésage traversant de la deuxième partie de fixation (10a, 10b) à l'aide du filetage intérieur de la première partie de fixation (6a, 6b).

7. Procédé de fabrication d'une fixation de module caméra selon au moins l'une des revendications précédentes 1 à 6,
comprenant les étapes de procédé suivantes :
a) fabrication d'un module caméra (1) par insertion d'une caméra (3) dans un corps de base de boîtier (2.1) et
b) pivotement de demi-coques (4a, 4b) d'une bague de retenue (2.2) en direction d'un objectif de la caméra (3) jusqu'à ce que les demi-coques (4a, 4b) soient en contact avec une partie périphérique de la caméra (3)
c) insertion du module caméra (1) dans une ouverture de montage de caméra (A) d'un composant côté carrosserie sur le véhicule automobile
d) rotation du module caméra (1) dans l'ouverture de montage de caméra (A) jusqu'à ce que la première partie de fixation (6a, 6b) du boîtier de caméra (2) et la deuxième partie de fixation (10a, 10b) soient superposées de telle sorte que l'axe médian de l'alésage traversant de la surface de fixation (11a ou 11b) de la deuxième partie de fixation (10a ou 10b) et l'axe médian du filetage intérieur de la première partie de fixation (6a ou 6b) soient alignés l'un avec l'autre
e) fixation du module caméra (1) au composant côté carrosserie par introduction d'une vis (13a ou 13b) dans l'alésage traversant (D) de la deuxième partie de fixation et vissage dans le filetage intérieur de la première partie de fixation (6a ou 6b) pour obtenir une liaison vissée.
